(19) Europäisches Patentamt
European Patent Office
Office européen des brevets

(11) EP 2 047 236 B1

(12) **EUROPÄISCHE PATENTSCHRIFT**

(45) Veröffentlichungstag und Bekanntmachung des Hinweises auf die Patenterteilung:
**03.09.2014 Patentblatt 2014/36**

(21) Anmeldenummer: **07786015.3**

(22) Anmeldetag: **12.07.2007**

(51) Int Cl.:
**G01N 21/53** (2006.01)

(86) Internationale Anmeldenummer:
**PCT/EP2007/006183**

(87) Internationale Veröffentlichungsnummer:
**WO 2008/006578 (17.01.2008 Gazette 2008/03)**

(54) **VORRICHTUNG UND VERFAHREN ZUR UNTERSCHEIDUNG VON NEBELARTEN**

APPARATUS AND METHOD FOR DIFFERENTIATING TYPES OF MIST

DISPOSITIF ET PROCÉDÉ DE DISTINCTION DE TYPES DE BROUILLARDS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.07.2006 DE 102006032536**

(43) Veröffentlichungstag der Anmeldung:
**15.04.2009 Patentblatt 2009/16**

(73) Patentinhaber: **Hochschule für Technik und Wirtschaft des Saarlandes 66117 Saarbrücken (DE)**

(72) Erfinder:
• **LÖFFLER-MANG, Martin 76131 Karlsruhe (DE)**
• **STEFFEN, Roland 71106 Magstadt (DE)**

(74) Vertreter: **Banse & Steglich Patentanwaltskanzlei Herzog-Heinrich-Straße 23 80336 München (DE)**

(56) Entgegenhaltungen:
EP-A- 1 408 469     WO-A-94/09356
WO-A-95/29393     DE-A1- 4 334 208
DE-C1- 10 120 747     GB-A- 2 340 936

• STOW C D ET AL: "An optical device for the examination of mixed-phase aerosols" JOURNAL OF PHYSICS E. SCIENTIFIC INSTRUMENTS, INSTITUTE OF PHYSICS PUBLISHING, BRISTOL, GB, Bd. 13, Nr. 7, 1. Juli 1980 (1980-07-01), Seiten 737-740, XP020016242 ISSN: 0022-3735

**Beschreibung**

Die Erfindung betrifft eine Vorrichtung und ein Verfahren zur Unterscheidung von Nebelarten, insbesondere zum Einsatz in verkehrstechnischen Anlagen.

Eine wesentliche Information zur Steuerung von verkehrstechnischen Anlagen stellt die Sichtweite dar, die üblicherweise mit Hilfe von Extinktionsmessstrecken ermittelt wird. Bei der Messung der Extinktion wird auf einer Referenzlänge die Abschwächung eines Lichtstrahls bestimmt und daraus auf eine Sichtweite geschlossen.

Darüber hinaus kann die Kenntnis über die Nebelart je nach Wetterlage zur Abschätzung des wetterbedingten Gefährdungspotentials geeignet sein. Es kann z.B. auf eine Gefährdung des Verkehrs geschlossen werden, wenn die Partikel des Nebels als Wassertröpfchen oder als Eiskristalle erkannt werden, wodurch sich in kurzer Zeit Eis oder Tau auf der Fahrbahn bilden kann, die die Haftung von Reifen verringern. Eine solche Gefährdung ist dagegen geringer, wenn es sich bei dem Nebel um feste Partikel handelt, wie es z. B. bei Rauch der Fall ist.

Durch bloße Extinktionsmessungen lässt sich die Nebelart jedoch nicht feststellen. Dazu sind bekannterweise Streulichtmessungen notwendig, wobei die Nebelarten anhand einer oder mehrerer Streulichtgrößen, wie z.B. Streulichtintensitäten, bei entsprechenden Winkeln und/oder anhand eines oder mehrerer Streulichtgrößenverhältnisse z.B. als Verhältnisse von zwei Streulichtintensitäten bei verschiedenen Streuwinkeln voneinander unterscheidbar sind.

Weiterhin ist bei Extinktionsmessstrecken die zu detektierende Abschwächung sehr klein im Vergleich zum Hintergrundrauschen, so dass eine sehr genaue Messung der Sendeleistung und der Empfangsleistung des Messlichtstrahls erforderlich ist. Streulichtanordnungen haben demgegenüber ein besseres Signalrauschverhältnis, wobei jedoch das als Streulichtgröße gemessene Signal, d. h. z.B. die Streulichtintensität, bzw. das Streulichtgrößenverhältnis, z.B. das Verhältnis von zwei Streulichtintensitäten, nicht proportional zur gesuchten Sichtweite ist.

Weiterhin besteht sowohl bei der Streulichtmessung als auch bei der Extinktionsmessung die Problematik, dass die Lichtstärke des Messlichtstrahls genau bestimmt werden muss, um den gestreuten Anteil des Lichts bzw. die entsprechende Abschwächung zu bestimmen. Insbesondere, wenn eine solche Vorrichtung im Freien verwendet wird, kann es bereits nach kurzer Zeit zu Verschmutzungen oder Belägen auf transparenten Scheiben kommen, die zum Schutz der Lichtquelle bzw. zum Schutz des Fotodetektors zwischen Lichtquelle und Fotodetektor angeordnet sind. Diese Verschmutzung ist nicht ohne weiteres vorhersehbar oder messbar, da auch andere Effekte die Lichtstärke des von der Lichtquelle ausgesendeten Messlichtstrahls beeinflussen können, wie z. B. die Alterung der Lichtquelle oder Temperaturschwankungen.

Die Druckschrift EP 1 408 469 A2 offenbart ein Verfahren und eine Vorrichtung zur Branderkennung nach dem Streulichtprinzip durch gepulste Einstrahlung einer Strahlung einer ersten Wellenlänge längs einer ersten Strahlungsachse sowie einer Strahlung einer zweiten, demgegenüber kürzeren Wellenlänge längs einer zweiten Strahlungsachse in ein Messvolumen und Messung der an dem Messvolumen befindlichen partikelbestreuten Strahlungen unter einer Vorwärtsstreuwinkel von mehr als 90° und unter einem Rückwärtsstreuwinkel von weniger als 90°. Die Vorwärtsstreustrahlung und die Rückwärtsstreustrahlung der ersten und zweiten Wellenlänge werden getrennt voneinander gemessen und ausgewertet. Ziel ist es, Brandpartikel mit sehr kleiner und sehr großer Partikelgröße mit einer Vorrichtung zu erkennen.

Aus der Druckschrift WO 95/29393 ist eine Vorrichtung zur Messung der Lichtstreuung an in einem Trägermedium suspendierten Partikeln zur Ermittlung der Dichte oder der Größenverteilung der Partikel vorgesehen. Die Vorrichtung umfasst eine Lichtquelle, die Lichtstrahlen auf ein Streulichtzentrum in dem Trägermedium mit den darin suspendierten Partikeln richtet, mit einem Empfänger für einen Teil des im Streulichtzentrum entstehenden Streulichts und mit einer dem Empfänger nachgeordneten Auswerteeinrichtung. Es werden Streulichtgrößen unter einem stumpfen Winkel, einem spitzen Winkel oder einem rechten Winkel bezüglich der Lichtquelle gemessen und ausgewertet.

Aus der Druckschrift GB 2 340 936 A ist eine Vorrichtung zur Messung der Partikelgrößenverteilung in einem Messbereich offenbart, bei der Streulicht in verschiedenen Streuwinkeln gemessen wird, um daraus Partikelgrößen und die Partikelgrößenverteilung zu bestimmen.

In der Druckschrift DE 10 120 747 C1 ist ein Verfahren zur Bestimmung der Sichtweite, Niederschlagsmenge und Niederschlagsart offenbart, bei dem ein Streulichtgrößenverhältnis bestimmt wird, um auf das vorherrschende Dunstphänomen zu schließen. Keine Angabe ist der Druckschrift D4 entnehmbar, dass zusätzlich eine weitere Streulichtgröße bei einem Streuwinkel von 90° bestimmt wird, um so drei verschiedene Nebelarten, nämlich Dunst, Nebel mit flüssigen Partikeln und Nebel mit Eispartikeln, zu unterscheiden.

Aus der Druckschrift WO94/09356 A ist ein Vierstrahlwechsellichtverfahren zur Verwendung in einem Sichtbarkeitssensor bekannt, wobei die Messachsen einen spitzen Winkel von etwa 35° zueinander aufweisen.

Aus der Druckschrift DE 43 34 208 A1 ist ein Streulichtphotometer nach dem Vierstrahlwechsellichtverfahren bekannt, bei dem jeweils ein Sender und ein Empfänger an einer Messachse angeordnet sind, wobei sich die Messachsen unter einem rechten Winkel schneiden.

Die Druckschrift Stow et al., "An optical device for the examination of mixedphase aerosols", Journal of Physics E. Scientific Instruments, Institute of Physics Publishing, Bristol, GB, Bd. 13, Nr. 7, 1. Juli 1980, Seiten 737-740 betrifft die Unterscheidung zwischen Nebel mit flüssigen Partikeln und Nebel mit Eispartikeln aufgrund der Winkelabhängigkeit der Streulichtgröße.

Aus diesem Grunde ist es wünschenswert, eine Vorrichtung zur Bestimmung der Nebelart zur Verfügung zu stellen, die im Freien verwendet werden kann und wobei die Messung nicht durch Einflüsse wie z. B. die Verschmutzung oder Alterung der Lichtquelle bzw. des Fotodetektors beeinträchtigt wird.

Diese Aufgabe wird durch die Vorrichtung nach Anspruch 1 sowie das Verfahren gemäß dem nebengeordneten Anspruch gelöst.

Weitere vorteilhafte Ausgestaltungen der Erfindung sind in den abhängigen Ansprüchen angegeben.

Gemäß einem ersten Aspekt der vorliegenden Erfindung ist eine Vorrichtung zur Unterscheidung von Nebelarten vorgesehen. Die Vorrichtung umfasst eine Anzahl von um einen Messraum angeordneten Lichtquellen zum Aussenden von Lichtstrahlen und eine Anzahl von um den Messraum angeordneten Photodetektoren zum Detektieren der Intensität eines empfangenen Lichtstrahls. Mit Hilfe einer Ansteuereinheit werden die Lichtquellen angesteuert und mit Hilfe einer Detektionseinheit, die mit den Photodetektoren verbunden ist, werden die ausgesendeten Lichtstrahlen detektiert. Eine Auswerteinheit, die mit der Ansteuereinheit und der Detektionseinheit verbunden ist, ist vorgesehen, um mit Hilfe eines Vierstrahl bzw. Mehrstrahl-Wechsellichtverfahrens mindestens eine Streulichtgröße bei einem bestimmten Winkel und/oder mindestens ein Streulichtgrößenverhältnis als Verhältnis zweier Streulichtgrößen bei verschiedenen Streuwinkeln zu ermitteln, und um aus den ermittelten einer oder mehreren Streulichtgrößen und/oder einer oder mehreren Streulichtgrößenverhältnissen die Nebelart zu bestimmen.

Die Streulichtgröße ist winkelabhängig und entspricht einem Anteil der Intensität eines Lichtstrahls, der in die durch den Winkel definierte Richtung gestreut wird. Dabei entspricht ein Winkel von 0° der Extinktionsrichtung des Messlichtstrahls. Den Bereich von 0° bis 90° bezeichnet man als Vorwärtsstreuung, den Bereich von 90° bis 180° als Rückstreuung. Dunst, d.h. Nebel der durch feste Partikel hervorgerufen wird, weist ein deutlich höheres Verhältnis von Vorwärts- zu Rückstreuung auf als wässriger Nebel, d.h. Nebel der durch Wassertröpfchen und/oder Eiskristalle hervorgerufen wird. Beim wässrigen Nebel ist zudem die Vorwärtsstreuung bei Wassertröpfchen viel stärker als bei Eiskristallen.

Gemäß einem weiteren Aspekt der vorliegenden Erfindung ist ein Verfahren zur Unterscheidung von Nebelarten vorgesehen, mit den Schritten des Aussendens von Lichtstrahlen in einen Messbereich, des Detektierens einer Streulichtgröße aus dem Messbereich, des Ermittelns eines Streulichtgrößenverhältnis als Verhältnis zwischen einer Streulichtgröße bei einem stumpfen Winkel der Streuung und einer Streulichtgröße bei einem spitzen Winkel der Streuung mit Hilfe eines Vierstrahl-Wechsellichtverfahrens, und des Bestimmens der Nebelart aus dem ermittelten Streulichtgrößenverhältnis.

Bevorzugte Ausführungsformen der Erfindung werden nachfolgend anhand der beigefügten Zeichnungen näher erläutert. Es zeigen:

Figur 1 eine schematische Darstellung eines Messraums mit zwei Lichtquellen und zwei Fotodetektoren zur Messung einer Streulichtgröße bei einem Winkel von 90° mit Hilfe des Vierstrahl-Wechsellichtverfahrens;

Figur 2 eine Anwendung des Vierstrahl-Wechsellichtverfahrens für Messungen der Streulichtintensität für Winkel, die von 90° verschieden sind;

Figur 3 eine erfindungsgemäße Vorrichtung zur Bestimmung der Nebelart und der Sichtweite mit mehreren Lichtquellen und Fotodetektoren; und

Figur 4 eine Anordnung zur Bestimmung der Sendeleistung der Lichtquelle, die zur Extinktionsmessung für die Sichtweitenbestimmung verwendet wird.

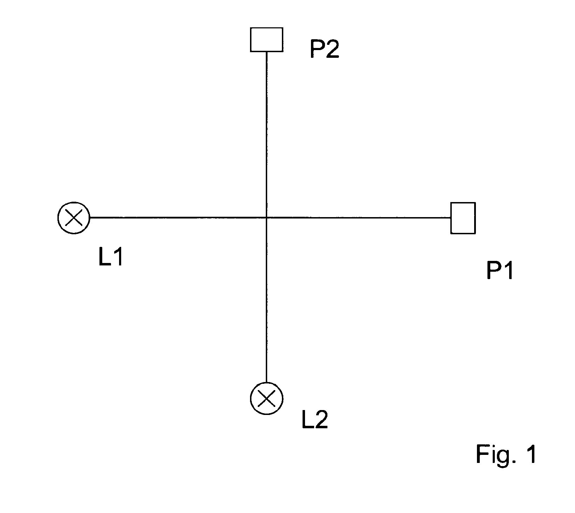

Figur 1 zeigt eine Anordnung zur Veranschaulichung einer Messung einer Streulichtgröße, d.h. der Streulichtintensität, bei einem Winkel von 90°. Die Anordnung umfasst eine erste und eine zweite Lichtquelle L1, L2 und einen ersten und einen zweiten Fotodetektor P1, P2, die so angeordnet sind, dass die erste Lichtquelle L1 einen Messlichtstrahl auf den ersten Fotodetektor P1 und die zweite Lichtquelle L2 einen Messlichtstrahl auf den zweiten Fotodetektor P2 richtet. Die Lichtquellen L1, L2 sind beispielsweise als Leuchtdioden, Laserdioden und dergleichen ausgebildet. Die Fotodetektoren P1 und P2 können als Fotodioden, Fotowiderstände, Fototransistoren und dergleichen ausgebildet sein. Die Lichtquellen L1, L2 bzw. die Fotodetektoren P1, P2 sind vorzugsweise vom gleichen Typ, so dass die gemessenen elektrischen Größen miteinander in einfacher Weise vergleichbar sind.

Die Lichtstrahlen kreuzen sich unter einem Winkel von 90° in einem Messbereich (gestrichelt umrandet). Eine solche Anordnung kann verwendet werden, um eine Streulichtmessung für Streulicht in einem Winkel von 90° für den Messbereich vorzunehmen, durch den die Lichtstrahlen verlaufen.

Bei einer Streulichtmessung mit einer Anordnung von nur einer Lichtquelle L und einem Fotodetektor P besteht das Problem, dass die Größe der Lichtstärke des von der Lichtquelle L in den Messbereich abgegebenen Lichtstrahls nur mit erheblichem Aufwand exakt bestimmbar ist. Denn aufgrund einer Alterung der Lichtquelle, aufgrund von nicht erfassbaren Schwankungen der Ansteuerleistung, aufgrund von Temperaturschwankungen, sowie aufgrund von Verschmutzungen, die sich auf einem in der Praxis häufig zwischen der Lichtquelle und dem Fotodetektor angeordneten Schutzfenster ablagern, ist die Intensität des in den Messbereich abgestrahlten Lichtstrahls nicht konstant. Auf gleiche Weise ist die seitens des Fotodetektors gemessene Lichtstärke durch Verschmutzungen auf einem weiteren vor dem Fotodetektor angebrachten Schutzfenster, aufgrund von Temperaturschwankungen und aufgrund einer Alterung des Fotodetektors beeinflusst. Diese Einflüsse sind nicht vorhersehbar und können eine Streulichtmessung erheblich beeinträchtigen, da die zu messenden Signalstärken sehr gering sind.

Die in Figur 1 gezeigte Anordnung ermöglicht es nun, durch geeignete unabhängige Messungen der Lichtintensitäten des auf die Fotodetektoren P einfallenden Lichtes von der ersten und der zweiten Lichtquelle die durch die oben beschriebenen Faktoren hervorgerufenen Einflüsse auf die Streulichtmessung rechnerisch zu eliminieren. So kann unabhängig von der Verschmutzung von Schutzfenstern, die der Messlichtstrahl durchläuft, von den Alterungen von Lichtquellen und Fotodetektoren bzw. von sonstigen Einflüssen der Streulichtanteil bei dem Winkel von 90° in dem Messbereich festgestellt werden.

$$\sigma_{90°} = \sqrt{\frac{R_{P1,2} R_{P2,1}}{R_{P1,1} R_{P2,2}}} \,,$$

wobei $\sigma_{90°}$ der Streulichtintensität bei dem Winkel von 90° in Bezug auf den Extinktionsanteil des Lichts ($\sigma_{0°}$) und $R_{PXLX}$ der durch den Detektor $P_x$ empfangenen Intensität des Lichts, das von der Lichtquelle $L_x$ ausgesendet wird, entsprechen.

Um eine Trennung der Messungen für die beiden Messlichtstrahlen zu erreichen, können die Lichtquellen so aktiviert werden, dass die beiden Lichtquellen L1, L2 nicht gleichzeitig einen Messlichtstrahl aussenden, so dass zu jedem Zeitpunkt maximal nur eine der beiden Lichtquellen eingeschaltet ist und den Messlichtstrahl aussendet. Beispielsweise werden dazu die Lichtquellen mit einer Pulsfrequenz gepulst betrieben.

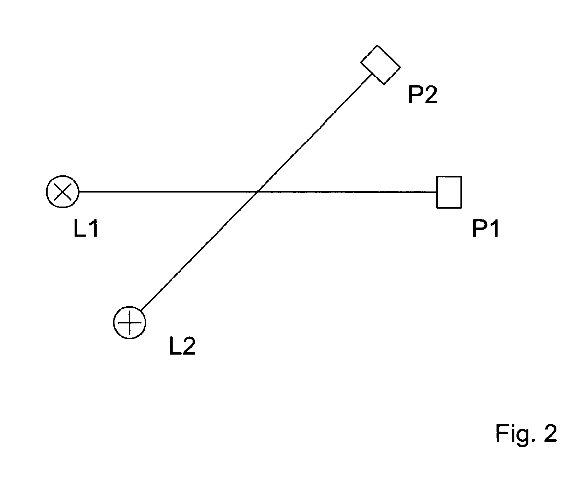

In Figur 2 ist eine vergleichbare Messanordnung gezeigt, bei der zwei Lichtquellen-Fotodetektor-Paare mit einem Winkel zueinander angeordnet sind, der ungleich 90° ist. Auch in diesem Fall lässt sich der Streulichtanteil mit Bezug auf den Extinktionsanteil des Messlichtstrahls bei dem Winkel, unter dem die Lichtquellen bezüglich des Messbereichs (Schnittpunkt der Messlichtstrahlen) zueinander angeordnet sind, bestimmen.

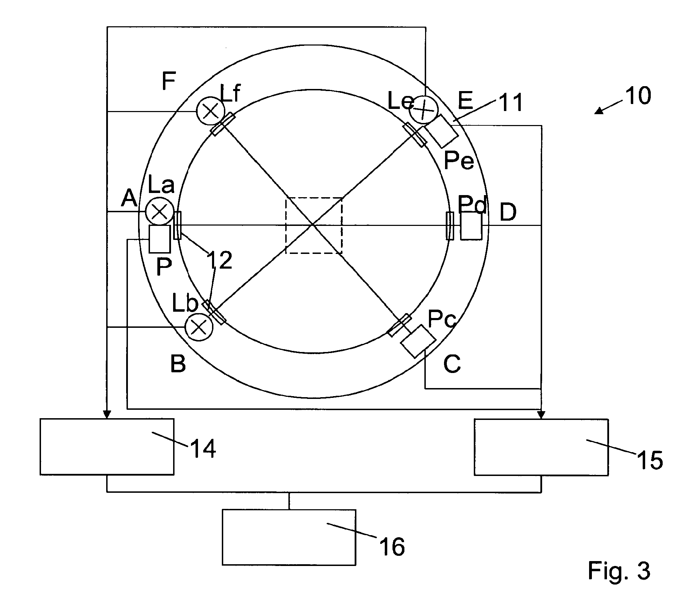

In Figur 3 ist eine schematische Darstellung einer Vorrichtung 10 zur Bestimmung der Nebelart gezeigt, bei der die zuvor erläuterten Prinzipien und Merkmale angewendet werden. Die Vorrichtung 10 umfasst eine ringförmige Messeinheit 11, die als Gehäuse dient und in der Lichtquellen La, Lb, Le und Lf an den Positionen A, B, E und F und Fotodetektoren Pa, Pc, Pd und Pe an den Positionen A, C, D und E angeordnet sind. Die Lichtquellen La, Lb, Le und Lf sind vorzugsweise als Leuchtdioden ausgebildet.

Die Lichtquellen La, Lb, Le und Lf sind in der ringförmigen Messeinheit 11 angeordnet und vor äußeren Einflüssen geschützt. In Abstrahl- bzw. Einfallsrichtung des jeweiligen Messlichtstrahls befinden sich Schutzfenster 12, die die Lichtquellen und die Fotodioden in der ringförmigen Messeinheit 11 vor äußeren Einflüssen schützen und zumindest teilweise transparent ausgebildet sind, um für die Messlichtstrahlen durchlässig zu sein. Im Idealfall wird der Messlichtstrahl durch die Schutzfenster nicht nennenswert abgeschwächt.

Die Anordnung der Lichtquellen Lx und der Fotodetektoren Px definieren drei Messachsen entlang der einander gegenüberliegenden Positionen A und D (Mad), B und E (Mbe), sowie C und F (Mcf). Die Messachsen schneiden sich vorzugsweise in einem Punkt in dem Messbereich oder durchlaufen alle den Messbereich. Der Messbereich ist dabei der Bezugspunkt der Winkelbeziehungen zwischen den Messachsen. Die Messachsen Mbe und Mcf verlaufen zueinander rechtwinklig. Dagegen ist die Messachse Mad unter einem Winkel zur Messachse Mbe angeordnet, der einem Winkel aus einem Bereich zwischen 20° und 45° insbesondere aus einem Bereich zwischen 30° und 40°, vorzugsweise jedoch 35° entspricht und der bezüglich der Messachse Mbe zwischen den Lichtquellen Lb und Lf an den Punkten B und F angeordnet ist.

Eine solche Anordnung ermöglicht es, ein Streulichtintensitätsverhältnis, das durch das Verhältnis aus einem Streulichtanteil in einer Vorwärtsrichtung und einem Streulichtanteil in einer Rückwärtsrichtung definiert ist, einen Streulichtanteil bei 90° und einen Streulichtanteil in der Vorwärtsrichtung zu bestimmen. Die Vorwärtsrichtung ist durch einen Winkel kleiner 90° mit Bezug auf eine Extinktionsrichtung (0°) des entsprechenden Lichtstrahls definiert, d.h. die Richtung des Streulichtes bildet mit der Richtung des ausgesandten Messlichtstrahls einen stumpfen Winkel.

Zur Durchführung der Messungen ist eine Ansteuereinheit 14 für die Lichtquellen La, Lb, Le und Lf und eine Detektionseinheit 15 zur Auswertung des in den Fotodetektoren Pa, Pc, Pd und Pe empfangenen Lichts vorgesehen. Die Ansteuereinheit 14 und die Detektionseinheit 15 sind mit einer Auswerteeinheit 16 verbunden, die durch Steuern der Ansteuereinheit 14 und der Detektionseinheit 15 die Messungen der Streulichtintensitäten und des Streulichtintensitätsverhältnisses vornimmt.

Die o.a. Größen des Streulichtverhältnisses, des Streulichtanteils bei 90° und des Streulichtanteils in einer Vorwärtsrichtung ermöglichen eine Bestimmung und Unterscheidung von verschiedenen Nebelarten.

Im Detail werden die Messungen nacheinander und unabhängig durchgeführt. Zur Bestimmung des Streulichtverhältnisses werden die Lichtquellen Lb und Le und die Fotodetektoren Pa und Pd verwendet. Das Streulichtverhältnis $\sigma_{35°}/\sigma_{145°}$ ergibt sich als

$$\frac{\sigma_{35°}}{\sigma_{145°}} = \sqrt{\frac{R_{Pdl,e} R_{Pdl,b}}{R_{Pdl,b} R_{Pdl,e}}}$$

Um einen Streulichtanteil in Vorwärtsrichtung zu ermitteln, werden die Lichtquellen La und Lb an den Position A bzw. B und die Fotodetektoren Pd und Pe an den Positionen D und E verwendet.

$$\sigma_{35°} = \sqrt{\frac{R_{Pdl,b} R_{Pel,a}}{R_{Pdl,a} R_{Pel,b}}}$$

Um einen Streulichtanteil bei dem Winkel von 90° zu ermitteln, werden die Lichtquellen Lb und Lf an den Position B bzw. F und die Fotodetektoren Pc und Pe an den Positionen C und E verwendet.

$$\sigma_{90°} = \sqrt{\frac{R_{Pel,b} R_{Pel,f}}{R_{Pel,f} R_{Pel,b}}}$$

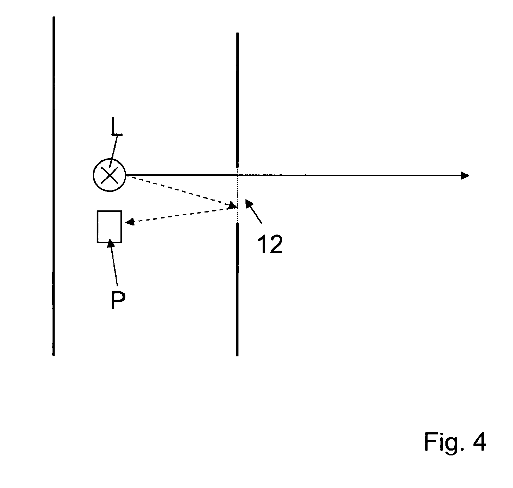

Es ergibt sich bei Bestimmung aller o. g. Messgrößen, dass Lichtquellen an den Positionen A, B, E und F und Fotodetektoren an den Positionen A, C, D und E, angeordnet sind. Zumindest an den Positionen A und E, an denen sowohl eine Lichtquelle als auch ein Fotodetektor angeordnet sind, lassen sich Kombinationselemente verwenden, die in einem Bauelement sowohl die Lichtquelle als auch den Fotodetektor realisieren, so dass diese nahe beieinander angeordnet sind. Dies ermöglicht es weiterhin, die Funktion der Lichtquelle zu überwachen und die Intensität des ausgesendeten Lichtstrahles zu ermitteln. Dazu ist mit Bezug auf Fig. 4 das Schutzfenster 12 mit einer teildurchlässigen Verspiegelungsschicht versehen, so dass ein definierter Anteil (wenige Prozent) des von der entsprechenden Lichtquelle L ausgesandten Lichtstrahls auf den zugeordneten Fotodetektor reflektiert wird, so dass aus der Stärke des resultierenden Signals auf die Intensität des Lichtstrahles geschlossen werden kann. Diese Anordnung bietet darüber hinaus die Möglichkeit, plötzliche Verschmutzungen der Fenster durch Tröpfchen zu erkennen und die entsprechenden Messungen zu markieren, weil durch eine solche Verschmutzung ein rascher und deutlicher Anstieg der beobachteten reflektierten Intensität erfolgt. Die Auswertung und das Überwachen erfolgt mit Hilfe der Auswerteeinheit 16, der Ansteuereinheit 14 und der Detektionseinheit 15.

Während es zur Bestimmung der drei zu messenden Größen bei Einzelmessungen in separaten Vorrichtungen notwendig wäre, jeweils zwei Lichtquellen und zwei Fotodioden vorzusehen, um die Messungen mit Hilfe des Vierstrahl-Wechsellichtverfahrens durchzuführen, d. h. zur Bestimmung der drei Messgrößen wäre die Verwendung von sechs Lichtquellen und sechs Fotodioden notwendig, werden erfindungsgemäß bei der Vorrichtung 10 Lichtquellen L und Fotodioden P so kombiniert und angeordnet, dass nur vier Lichtquellen und vier Fotodioden benötigt werden, so dass jeweils zwei Lichtquellen und zwei Fotodioden eingespart werden können.

Die Messungen werden nacheinander durchgeführt, indem die entsprechenden Lichtquellen und Fotodetektoren mit Hilfe der Auswerteeinheit 16 aktiviert werden, wobei jeweils nur eine der Lichtquellen aktiviert ist, während die anderen deaktiviert sind, um so eine gegenseitige Beeinflussung der einzelnen Messungen zu verhindern. Um Fremdlichteinflüsse zu vermeiden, werden die Lichtquellen zusätzlich beim Aktivieren üblicherweise durch die Ansteuereinheit 14 mit einer Pulsfrequenz gepulst, z. B. mit einer vorbestimmten Pulsfrequenz von 30 KHz, und mit Hilfe der Auswerteeinheit 15 eine Fourier-Analyse des an einem entsprechenden Fotodetektor empfangenen Signals durchgeführt, um so den entsprechenden Frequenzanteil des durch den auszuwertenden Fotodetektor empfangenen Signals zu isolieren (Bandpass-Filter), so dass der nicht gepulste Fremdlichtanteil die Messung nicht beeinflusst.

Die Messungen an den Fotodetektoren P können in der Regel gleichzeitig für jede Lichtquelle L ausgeführt werden. D. h. es werden die Lichtquellen La, Lb, Le und Lf an den Positionen A, B, E und F nacheinander aktiviert und entsprechend den oben in den Formeln angegebenen Positionen der Fotodetektoren Pa, Pc, Pd und Pe die entsprechenden Messwerte ermittelt. So werden beispielsweise bei Aktivieren der Lichtquelle La an der Position A die entsprechenden Streulichtintensitäten im Messbereich gleichzeitig durch die Fotodetektoren Pd und Pe an den Positionen D bzw. E bestimmt. Danach wird Lb aktiviert, und es werden die Intensitäten des Streulichts in dem Messbereich durch die Fotodetektoren Pa, Pc, Pd und Pe an den Positionen A, C, E, D bestimmt. Anschließend wird Le aktiviert, und es werden die Intensitäten des Streulichts in dem Messbereich durch die Fotodetektoren Pa und Pd an den Positionen A und E bestimmt. Als letztes wird die Lichtquelle Lf aktiviert und es werden die Intensitäten des Streulichts in dem Messbereich durch die Fotodetektoren Pc und Pe an den Positionen C und E bestimmt. Die Streulichtintensitäten werden bei jeder Aktivierung einer der Lichtquellen L durch die Detektoreinheit 15 detektiert und in der Auswerteeinheit 16 ausgewertet.

In dem gezeigten Ausführungsbeispiel können die Lichtquellen daher unmittelbar nacheinander aktiviert und deaktiviert werden, so dass z.B. bei gleicher Frequenz jede der vier Lichtquellen etwa ein Viertel der Periodendauerfrequenz aktiv ist und während der übrigen Zeit deaktiviert ist. In einer Auswerteeinheit werden die so gemessenen Intensitäten, d. h. die Streulichtanteile für den Winkel von 90° bzw. die Streulichtanteile in Vorwärtsrichtung (35°) sowie das Streulichtverhältnis ausgewertet und die Nebelart entsprechend zugeordnet.

Die Nebelart kann beispielsweise in der Auswerteeinheit 16 anhand folgender Kriterien bestimmt werden. Bei den zu unterscheidenden Arten wie Dunst, Nebel mit flüssigen Partikeln und Nebel mit Eispartikeln wird die Unterscheidung anhand des ermittelten Streulichtverhältnisses und anhand des Verhältnisses zwischen der Streulichtgröße in Vorwärtsrichtung (bei 35°) und der Streulichtgröße bei 90° durchgeführt. So wird Dunst erkannt, wenn das Streulichtverhältnis $\sigma_{35°}/\sigma_{145°}$ größer als 10 ist und sich vorzugsweise in einem Bereich zwischen 13 und 30 befindet. Wird dabei Nebel erkannt, so kann aus dem Verhältnis zwischen der Streulichtintensität $\sigma_{35°}$ in Vorwärtsrichtung (bei 35°) und der Streulichtintensität $\sigma_{90°}$ bei 90° von größer als 20, vorzugsweise in einem Bereich zwischen 50 und 200, auf flüssige Partikel im Nebel geschlossen werden. Ist das Verhältnis kleiner als 20, vorzugsweise zwischen 0,1 und 10 so besteht der Nebel wahrscheinlich vorwiegend aus Eispartikeln.

Weiterhin kann bei Verwendung eines Lichtquelle-Fotodetektor-Paares auch eine Extinktionsmessung durchgeführt werden, indem die Abschwächung des Lichtstrahles an einer Messachse gemessen wird. Dazu wird eine Messachse ausgewählt, an der sich eine Lichtquelle und ein Fotodetektor gegenüberliegen. Dazu ist wie oben beschrieben, die Kenntnis über die tatsächlich ausgesendete Lichtstärke notwendig, um anhand der empfangenen Lichtstärke festzustellen, um welchen Betrag der Messstrahl beim Durchlaufen des Messbereichs abgeschwächt wurde. Daraus lässt sich die Sichtweite in der Auswerteeinheit 16 abschätzen. Die Bestimmung der Sichtweite anhand des Ergebnisses einer Extinktionsmessung bietet den Vorteil einer direkten Messung im Vergleich zu einer Sichtweitenbestimmung aus Streulichtintensitäten unter Zuhilfenahme von Modellvorstellungen über die Partikelzusammensetzung.

Werden bei der Messung der Streulichtgrößen und der Durchführung einer Fourier-Analyse Schwankungen im niederfrequenten Bereich, z.B. bei ca. 1 KHz oder in einem Bereich zwischen 100 und 500 Hz festgestellt, kann auf durch den Messraum fallende Tropfen bzw. Schneeflocken geschlossen werden. Die Auswerteeinheit 16 kann also durch eine zusätzliche Detektion eines Lichtanteils bei einer durch einen der Fotodetektoren bestimmten Signalfrequenz, die einer Frequenz eines durch den Messraum fallenden Regentropfens bzw. einer Frequenz einer den Messraum durchquerenden Schneeflocke entspricht, auf Regen bzw. Schneefall schließen. Die Stärke, mit der dieser Signalanteil ermittelt wird, gibt dann die Stärke des Regens bzw. Schneefalls an. Anhand der Information über Regen oder Schneefall kann die Bestimmung der Sichtweite in der Auswerteeinheit 16 weiter verbessert werden.

**Patentansprüche**

1. Vorrichtung (10) zur Unterscheidung von Nebelarten, umfassend:

    eine Anzahl von um einen Messbereich angeordneten Lichtquellen (L) zum Aussenden von Lichtstrahlen;
    eine Anzahl von um den Messbereich angeordneten Fotodetektoren (P) zum Detektieren von mindestens einer Streulichtgröße von Streulicht aus dem Messbereich;
    eine Ansteuereinheit (14) zum Ansteuern der Lichtquellen;
    eine Detektionseinheit (15), die mit den Fotodetektoren verbunden ist, um durch die Lichtquellen hervorgerufenes Streulicht zu detektieren,
    eine erste Anordnung mit zwei sich bezüglich des Messbereiches gegenüberliegende Fotodetektoren (Pa, Pd) an einer ersten Messachse (Mad) und zwei sich bezüglich des Messbereiches gegenüberliegende Lichtquellen (Lb, Le) an einer zweiten Messachse (Mbe), die sich unter einem ersten vorbestimmten Winkel in dem Messbereich kreuzen, der dem spitzen Winkel der zu ermittelnden Streulichtgröße entspricht,
    eine Auswerteinheit (16), die mit der Ansteuereinheit (14) und der Detektionseinheit (15) verbunden ist,

        - um mit Hilfe eines Vierstrahl-Wechsellichtverfahrens ein Streulichtgrößenverhältnis als Verhältnis zwischen einer Streulichtgröße bei einem stumpfen Winkel der Streuung und einer Streulichtgröße bei einem spitzen Winkel der Streuung zu ermitteln, wobei die Streulichtgröße durch jeden der Fotodetektoren bei einer Beleuchtung des Messbereichs mit jeder der Lichtquellen separat ermittelt und daraus das Streulichtgrößenverhältnis bestimmt wird;
        - um aus dem ermittelten Streulichtgrößenverhältnis die Nebelart zu bestimmen, wobei als Nebelart Dunst festgestellt wird, wenn das ermittelte Streulichtgrößenverhältnis einen vorbestimmten Schwellwert überschreitet, und ansonsten als Nebelart wässrigen oder eisförmigen Nebel festgestellt wird.

2. Vorrichtung nach Anspruch 1, wobei in einer zweiten Anordnung eine der Lichtquellen und einer der Fotodetektoren, die sich bezüglich des Messbereiches gegenüberliegen, jeweils an einer (der) ersten und (der) einer zweiten Messachse angeordnet sind, wobei die erste und die zweite Messachse bezüglich des Messraums zueinander einen (den) ersten vorbestimmten Winkel einschließen, wobei die erste und die zweite Lichtquelle bezüglich des Messbereichs den ersten vorbestimmten Winkel einschließen, wobei die Auswerteeinheit die Ansteuereinheit für die erste und zweite Lichtquelle ansteuert, so dass aus dem an dem ersten und dem zweiten Fotodetektor empfangenen Licht eine Streulichtgröße bei dem ersten vorbestimmten Winkel ermittelbar ist; und wobei die Auswerteeinheit ausgebildet ist, um abhängig von der ermittelten Streulichtgröße für den ersten vorbestimmten Winkel die Nebelart zu bestimmen.

3. Vorrichtung nach einem der Ansprüche 1 bis 2, wobei in einer dritten Anordnung eine der Lichtquellen und einer der Fotodetektoren, die sich bezüglich des Messbereiches gegenüberliegen, jeweils an einer (der) ersten und einer dritten Messachse angeordnet sind, wobei die erste und die dritte Messachse bezüglich des Messraums zueinander einen rechten Winkel einschließen, wobei die Auswerteeinheit über die Ansteuereinheit die entsprechenden Lichtquellen an der ersten und der dritten Messachse ansteuert, so dass aus dem an den entsprechenden Fotodetektoren empfangenen Licht eine weitere Streulichtgröße bei dem rechten Winkel ermittelbar ist; und wobei die Auswerteeinheit ausgebildet ist, um abhängig von der ermittelten Streulichtgröße für den rechten Winkel die Nebelart zu bestimmen.

4. Vorrichtung nach Anspruch 2 oder 3, wobei die Auswerteeinheit die Ansteuereinheit weiterhin ansteuert, dass mindestens eine der Lichtquellen und mindestens einer der Fotodetektoren, die sich bezüglich des Messbereiches an einer der Messachsen gegenüberliegen, so betrieben werden, um eine Extinktionsgröße zu messen, und wobei die Auswerteinheit ausgebildet ist, um aus der ermittelten Extinktionsgröße eine Sichtweite zu ermitteln.

5. Vorrichtung nach Anspruch 4, wobei zumindest die Lichtquelle an der Messachse, die zur Messung der Extinktionsgröße verwendet wird, ortsnah mit einem Fotodetektor gekoppelt ist, so dass der Fotodetektor eine Information über die ausgesendete Lichtleistung angibt, wobei die Auswerteeinheit ausgebildet ist, um die Extinktionsgröße abhängig von der Information über die ausgesendete Lichtleistung zu ermitteln.

6. Vorrichtung nach Anspruch 5, wobei die Lichtquelle mit dem Fotodetektor über einen auf einem Schutzfenster aufgebrachten teildurchlässigen Spiegel gekoppelt ist, so dass das von der Lichtquelle ausgesendete Licht zu einem vorgegebenen Anteil von dem Fotodetektor empfangen wird, wobei die Detektionseinheit ausgebildet ist, um aus dem empfangenen reflektierten Anteil des ausgesendeten Lichts die von der Lichtquelle abgegebene Lichtleistung zu ermitteln, und wobei die Auswerteeinheit ausgebildet ist, um abhängig von der ermittelten Lichtleistung die Extinktionsgröße zu ermitteln.

7. Vorrichtung nach einem der Ansprüche 1 bis 6, wobei die Lichtquellen und die Fotodetektoren in einer Messeinheit vorgesehen sind, und wobei im Bereich der Messachsen vor den Lichtquellen und vor den Fotodetektoren an der Messeinheit Schutzfenster angeordnet sind, um die Lichtquellen und die Fotodetektoren vor externen Einflüssen zu schützen.

8. Verfahren zur Unterscheidung von Nebelarten, mit folgenden Schritten:- Aussenden von Lichtstrahlen in einen Messbereich;

 - Detektieren mindestens einer Streulichtgröße aus dem Messbereich;
 - Ermitteln eines Streulichtgrößenverhältnis als Verhältnis zwischen einer Streulichtgröße bei einem stumpfen Winkel der Streuung und einer Streulichtgröße bei einem spitzen Winkel der Streuung mit Hilfe eines Vierstrahl-Wechsellichtverfahrens, und
 - Bestimmen der Nebelart aus dem ermittelten Streulichtgrößenverhältnis,

wobei in einer ersten Anordnung zwei sich bezüglich des Messbereiches gegenüberliegende Fotodetektoren (Pa, Pd) an einer ersten Messachse (Mad) und zwei sich bezüglich des Messbereiches gegenüberliegende Lichtquellen (Lb, Le) an einer zweiten Messachse (Mbe) angeordnet sind, die sich unter einem ersten vorbestimmten Winkel in dem Messbereich kreuzen, der dem spitzen Winkel der zu ermittelnden Streuung entspricht, wobei die Streulichtgrößen durch jeden der Fotodetektoren bei einer Beleuchtung des Messbereichs mit jeder der Lichtquellen separat ermittelt werden und daraus das Streulichtgrößenverhältnis bestimmt wird, wobei als Nebelart Dunst festgestellt wird, wenn das ermittelte Streulichtgrößenverhältnis einen vorbestimmten Schwellwert überschreitet, und ansonsten als Nebelart wässrigen oder eisförmigen Nebel festgestellt wird.

9. Verfahren nach Anspruch 8, wobei in einer zweiten Anordnung eine der Lichtquellen und einer der Fotodetektoren, die sich bezüglich des Messbereiches gegenüberliegen, jeweils an einer (der) ersten und (der) einer zweiten Messachse angeordnet sind,

EP 2 047 236 B1

wobei die erste und die zweite Messachse bezüglich des Messraums zueinander einen (den) ersten vorbestimmten Winkel einschließen,

wobei die erste und die zweite Lichtquelle bezüglich des Messbereichs den ersten vorbestimmten Winkel einschließen,

wobei aus dem an dem ersten und dem zweiten Fotodetektor empfangenen Streulicht eine Streulichtgröße bei dem ersten vorbestimmten Winkel ermittelt wird; und

wobei abhängig von der ermittelten Streulichtgröße für den ersten vorbestimmten Winkel die Nebelart bestimmt wird.

10. Verfahren nach einem der Ansprüche 8 bis 9, wobei in einer dritten Anordnung eine der Lichtquellen und einer der Fotodetektoren, die sich bezüglich des Messbereiches gegenüberliegen, jeweils an einer (der) ersten und einer dritten Messachse angeordnet sind,

wobei die erste und die dritte Messachse bezüglich des Messraums zueinander einen rechten Winkel einschließen, wobei aus dem an den entsprechenden Fotodetektoren empfangenen Licht eine weitere Streulichtgröße bei dem rechten Winkel ermittelt wird; und

wobei abhängig von der ermittelten Streulichtgröße für den rechten Winkel die Nebelart bestimmt wird.

11. Verfahren nach Anspruch 9 oder 10, wobei mindestens eine der Lichtquellen und mindestens einer der Fotodetektoren, die sich bezüglich des Messbereiches an einer der Messachsen gegenüberliegen, so betrieben werden, um eine Extinktionsgröße zu messen, und wobei aus der ermittelten Extinktionsgröße eine Sichtweite ermittelt wird.

12. Verfahren nach Anspruch 11, wobei zumindest die Lichtquelle an der Messachse, die zur Messung der Extinktionsgröße verwendet wird, ortsnah mit einem Fotodetektor gekoppelt ist, so dass der Fotodetektor eine Information über die ausgesendete Lichtleistung angibt, wobei die Extinktionsgröße abhängig von der Information über die ausgesendete Lichtleistung ermittelt wird.

13. Verfahren nach Anspruch 12, wobei die Lichtquelle mit dem Fotodetektor über einen auf einem Schutzfenster aufgebrachten teildurchlässigen Spiegel gekoppelt ist, so dass das von der Lichtquelle ausgesendete Licht zu einem vorgegebenen Anteil von dem Fotodetektor empfangen wird, wobei aus dem empfangenen reflektierten Anteil des ausgesendeten Lichts die von der Lichtquelle abgegebene Lichtleistung ermittelt wird, und wobei abhängig von der ermittelten Lichtleistung die Extinktionsgröße ermittelt wird.

**Claims**

1. A device for distinguishing kinds of fog, comprising:

   a number of light sources disposed around a measuring region for emitting light beams;
   a number of photodetectors disposed around the measuring region for detecting at least one of a diffused light quantity of diffused light from the measuring region;
   a control unit (14) for controlling the light sources;
   a detection unit (15) which is coupled with the photodetectors in order to detect diffused light caused by the light sources,

   wherein two photodetectors (Pa, Pd) facing each other with respect to the measuring region along a first measuring axle (Mad) and two light sources (Lb, Le) facing each other with respect to the measuring region along a second measurement axle (Mbe) are arranged in a first arrangement,
   which the first and second measurement axles (Mad, Mbe) cross each other with a first predetermined angle in the measurement region which corresponds to a pointed angle of the diffused light quantity to be detected,
   wherein an evaluation unit (16) is provided which is coupled with the control unit (14) and the detection unit (15) and which is configured

   - to determine by means of a four-beam alternating light method a diffused light quantity ratio as a ratio between a diffused light quantity at an obtuse angle of the diffusion and a diffused light quantity at a pointed angle of the diffusion, wherein the diffused light quantity is determined by means of each of the photodetectors at an illumination of the measurement region with each of the light sources separately and to determine the diffused light quantity ratio thereof; and
   - to determine the kind of fog by the determined diffused light quantity ratio whereas a kind of fog fume is determined if the detected diffused light quantity ratio exceeds a predetermined threshold while otherwise aqueous or icy fog is determined.

2. The device according to claim 1, wherein one of the light sources and one of the photodetectors which are facing each other with respect to the measuring region are each arranged at a (the) first and (the) a second measurement axle in a second arrangement, wherein the first and the second measuring axle define a (the) first predetermined angle with respect to each other, wherein the first and the second light sources define a first predetermined angle with re-

8

spect to the measuring region, wherein the evaluation unit controls the control unit for the first and second light source so that a diffused light quantity at the first predetermined angle is to be determined by the light received by the first and second photodetectors; and wherein the evaluation unit is configured to determine the kind of fog depending on the determined diffused light quantity for the first predetermined angle.

3. The device according to claim 1 or 2, wherein in a third arrangement one of the light sources and one of the photodetectors which are facing each other with respect of the measuring region are each arranged at a (the) first and a third measuring axles in a third arrangement,
wherein the first and the third measuring axle define a right angle with respect to the measuring region, wherein the evaluation unit controls the corresponding light sources at the first and the third measuring axles by means of the control unit so that a further diffused light quantity at the right angle can be determined by the light received by the corresponding photodetectors; and
wherein the evaluation unit is configured to determine the kind of fog depending on the determined diffused light quantity at the right angle.

4. The device according to claims 2 or 3, wherein the evaluation unit further controls the control unit, so that at least one of the light sources and at least one of the photodetectors which are facing each other with respect to the measuring region along one of the measuring axles are operated in order to measure an extinction quantity and wherein the control unit is configured to determine a sight distance by the determined extinction quantity.

5. The device according to claim 4, wherein at least the light source at the measuring axle which is used for measuring the extinction quantity is locally closely coupled with the photodetector so that the photodetector indicates an information about the emitted light power, wherein the evaluation unit is configured to determine the extinction quantity depending on the information about the emitted light power.

6. The device according to claim 5, wherein the light source is coupled with the photodetector via a semireflecting mirror arranged on a protection window so that the light emitted from the light source is received by the photodetector with a predetermined portion, wherein the detection unit is configured to determine the light power emitted by the light source by the received reflected portion of the emitted light and wherein the evaluation unit is configured to determine the extinction quantity depending on the determined light power.

7. The device according to one of the claims 1 to 6, wherein the light sources and the photodetectors are provided in a measuring unit and wherein protection windows are arranged in a region of the measuring axles in front of the light sources and in front of the photodetectors of the measuring unit to protect the light sources and the photodetectors against external impacts.

8. Methods for the distinguishing of kinds of fog comprising the steps of:

    - emitting light beams into a measuring region;
    - detecting at least one diffused light quantity from the measuring region;
    - determining a diffused light quantity ratio as a ratio between a diffused light quantity at an obtuse angle of the diffusion and a diffused light quantity at a pointed angle of diffusion by means of a four-beam alternating light process, and
    - determining the kind of fog by the detected diffused light quantity ratio, wherein two photodetectors (Pa, Pd) along a first measuring axle (Mad) facing each other with respect to the measuring region and two light sources (Lb, Le) at a second measuring axle (Mbe) facing each other with respect to the measuring region are arranged in a first arrangement;

wherein the measuring axles crossing each other under a first predetermined angle which corresponds to the pointed angle of the diffusion to be detected wherein the diffused light quantities are detected by means of each of the photodetectors separately when illuminating the measuring region by means of each of the light sources and the diffused light quantity ratio is determined thereof, wherein as kind of fog fume is determined if the determined diffused light quantity ratio exceeds a predetermined threshold while otherwise aqueous or icy fog is determined.

9. The method according to claim 8, wherein one of the light sources and one of the photodetectors facing each other with respect to the measurement region are both arranged on a (the) first and (the) a second measurement axles in a second arrangement, wherein the first and the second measurement axles define a (the) first predetermined angle with respect to each other,
wherein the first and the second light sources define the first predetermined angle with respect to the measurement region,
wherein a diffused light quantity at a first predetermined angle is determined from the diffused light received at the first and the second photodetectors; and
wherein the kind of fog is determined depending on the determined diffused light quantity at the first predetermined angle.

**10.** The method according to one of the claims 8 to 9, wherein one of the light sources and one of the photodetectors facing each other with respect to the measurement region are arranged along a (the) first and a third measurement axles in a third arrangement, wherein the first and the third measurement axles define a right angle with respect to the measurement region,

wherein from the light received at the respective photodetectors, a further diffused light quantity at the right angle is determined; and

wherein the kind of fog is determined depending on the determined diffused light quantity for the right angle.

**11.** Method according to claim 9 or 10, wherein at least one of the light sources and at least one of the photodetectors facing each other with respect to the measurement region are operated to measure an extinction quantity, wherein from the determined extinction quantity a sight distance is determined.

**12.** The method according to claim 11, wherein at least the light source at the measurement axle which is used for measuring the extinction quantity is coupled locally closely with a photodetector so that the photodetector indicates an information about the emitted light power, wherein the extinction quantity is determined depending on the information about the emitted light power.

**13.** The method according to claim 12, wherein the light source is coupled with the photodetector by means of a semi-reflective mirror arranged on a protection window so that the light emitted from the light source is received by the photodetector with a predetermined portion, wherein the light power emitted from the light source is determined by the received reflected portion of the emitted light and wherein the extinction quantity is determined depending on a determined light power.

**Revendications**

**1.** Dispositif (10) pour opérer une distinction entre des types de brouillards, comprenant :

un certain nombre de sources lumineuses (L) disposées autour d'une zone de mesure pour émettre des rayons lumineux ;
un certain nombre de photodétecteurs (P) disposés autour de la zone de mesure pour détecter au moins une valeur de lumière diffuse de la lumière diffuse émise à partir de la zone de mesure ;

une unité d'excitation (14) pour exciter les sources lumineuses ;
une unité de détection (15) qui est reliée aux photodétecteurs pour détecter la lumière diffuse produite par les sources lumineuses ;
dans lequel, dans un premier agencement, deux photodétecteurs (Pa, Pd) placés face à la zone de mesure sont disposés le long d'un premier axe de mesure (Mad) et deux sources lumineuses (Lb, Le) placées face à la zone de mesure sont disposées le long d'un deuxième axe de mesure (Mbe), qui se croisent dans la zone de mesure en formant un premier angle prédéterminé qui correspond à l'angle aigu de la valeur de lumière diffuse à calculer ;
une unité d'évaluation (16) qui est reliée à l'unité d'excitation (14) et à l'unité de détection (15)

- pour, à l'aide d'un procédé de lumière alternée à quatre faisceaux, calculer un rapport de valeurs de lumière diffuse sous la forme du rapport entre une valeur de lumière diffuse à un angle obtus de la diffusion et une valeur de lumière diffuse à un angle aigu de la diffusion, la valeur de lumière diffuse étant calculée de manière séparée par chacun des photodétecteurs à un éclairage de la zone de mesure avec chacune des sources lumineuses et le rapport de valeurs de lumière diffuse étant déterminé à partir de là ; et
- pour déterminer, à partir du rapport calculé de valeurs de lumière diffuse, le type de brouillard, de la brume étant détectée à titre de type de brouillard lorsque le rapport calculé de valeurs de lumière diffuse dépasse une valeur seuil prédéterminée, et le type de brouillard étant détecté par ailleurs comme étant un brouillard aqueux ou gelant.

**2.** Dispositif selon la revendication 1, dans lequel, dans un deuxième agencement, une des sources lumineuses et un des photodétecteurs, qui sont placés face à la zone de mesure, sont disposés respectivement le long d'un (du) premier et (du) d'un deuxième axe de mesure ;
dans lequel le premier et le deuxième axe de mesure forment, en se référant à la zone de mesure, ensemble un (le) premier angle prédéterminé ;
dans lequel la première et la deuxième source lumineuse forment, en se référant à la zone de mesure, le premier angle prédéterminé ;
dans lequel l'unité d'évaluation excite l'unité d'excitation pour la première et la deuxième source lumineuse, tant et si bien qu'à partir de la lumière reçue au premier et au deuxième photodétecteur, on peut calculer une valeur de lumière diffuse au premier angle prédéterminé ; et

dans lequel l'unité d'évaluation est réalisée pour pouvoir déterminer le type de brouillard en fonction de la valeur calculée de lumière diffuse pour le premier angle prédéterminé.

3. Dispositif selon l'une quelconque des revendications 1 à 2, dans lequel,

dans un troisième agencement, une des sources lumineuses et un des photodétecteurs, qui sont placés face à la zone de mesure, sont disposés respectivement le long d'un (du) premier et d'un troisième axe de mesure ;

dans lequel le premier et le troisième axe de mesure forment, en se référant à la zone de mesure, ensemble un angle droit ;

dans lequel l'unité d'évaluation excite, via l'unité d'excitation, les sources lumineuses correspondantes le long du premier et du troisième axe de mesure, tant et si bien qu'à partir de la lumière reçue par les photodétecteurs correspondants, on peut calculer une valeur supplémentaire de lumière diffuse à l'angle droit ; et

dans lequel l'unité d'évaluation est réalisée pour pouvoir déterminer le type de brouillard en fonction de la valeur calculée de lumière diffuse pour l'angle droit.

4. Dispositif selon la revendication 2 ou 3, dans lequel l'unité d'évaluation excite en outre l'unité d'excitation de façon à entraîner au moins une des sources lumineuses et au moins un des photodétecteurs qui sont placés face à la zone de mesure le long d'un des axes de mesure, pour mesurer une valeur d'extinction ; et

dans lequel l'unité d'évaluation est réalisée pour pouvoir calculer une distance de visibilité à partir de la valeur d'extinction calculée.

5. Dispositif selon la revendication 4, dans lequel au moins la source lumineuse le long de l'axe de mesure que l'on utilise pour la mesure de la valeur d'extinction, est couplée localement à un photodétecteur, tant et si bien que le photodétecteur fournit une information concernant le rendement lumineux émis ;

dans lequel l'unité d'évaluation est réalisée pour pouvoir calculer la valeur d'extinction en fonction de l'information concernant le rendement lumineux émis.

6. Dispositif selon la revendication 5, dans lequel la source lumineuse est couplée au photodétecteur via un miroir semi-transparent appliqué sur une fenêtre de protection, tant et si bien que la lumière émise par la source lumineuse est reçue, à concurrence d'une fraction définie, par le photodétecteur ;

dans lequel l'unité de détection est réalisée pour pouvoir calculer, à partir de la fraction réfléchie reçue de la lumière émise, le rendement lumineux fourni par la source lumineuse ; et

dans lequel l'unité d'évaluation est réalisée pour pouvoir calculer la valeur d'extinction en fonction du rendement lumineux calculé.

7. Dispositif selon l'une quelconque des revendications 1 à 6, dans lequel les sources lumineuses et les photodétecteurs sont prévus dans une unité de mesure ; et

dans lequel, dans la zone des axes de mesure, devant les sources lumineuses et devant les photodétecteurs, sont disposées des fenêtres de protection contre l'unité de mesure pour protéger les sources lumineuses et les photodétecteurs contre des influences externes.

8. Procédé pour opérer une distinction entre des types de brouillards, comprenant les étapes suivantes consistant à :

- émettre des faisceaux lumineux dans une zone de mesure ;
- détecter au moins une valeur de lumière diffuse à partir de la zone de mesure ;
- calculer un rapport de valeurs de lumière diffuse sous la forme du rapport entre une valeur de lumière diffuse à un angle obtus de la diffusion et une valeur de lumière diffuse à un angle aigu de la diffusion, à l'aide d'un procédé de lumière alternée à quatre faisceaux ; et
- déterminer le type de brouillard à partir du rapport calculé de valeurs de lumière diffuse ;

dans lequel, dans un premier agencement, deux photodétecteurs (Pa, Pd) placés face à la zone de mesure sont disposés le long d'un premier axe de mesure (Mad) et deux sources lumineuses (Lb, Le) placées face à la zone de mesure sont disposées le long d'un deuxième axe de mesure (Mbe), qui se croisent dans la zone de mesure en formant un premier angle prédéterminé qui correspond à l'angle aigu de la valeur de lumière diffuse à calculer ;

dans lequel les valeurs de lumière diffuse sont calculées de manière séparée par chacun des photodétecteurs à un éclairage de la zone de mesure avec chacune des sources lumineuses et le rapport de valeurs de lumière diffuse est déterminé à partir de là ;

dans lequel on détecte de la brume à titre de type de brouillard lorsque le rapport calculé de valeurs de lumière diffuse dépasse une valeur seuil prédéterminée, et le type de brouillard étant détecté par ailleurs comme étant un brouillard aqueux ou gelant.

9. Procédé selon la revendication 8, dans lequel, dans un deuxième agencement, une des sources lumineuses et un des photodétecteurs, qui sont disposés face à la zone de mesure, sont disposés respectivement le long d'un (du) premier et (du) d'un deuxième axe de mesure ;

dans lequel le premier et le deuxième axe de mesure forment, en se référant à la zone de mesure, ensemble un (le) premier angle prédéterminé ;

dans lequel la première et la deuxième source lumineuse forment, en se référant à la zone de mesure, le premier angle prédéterminé ;

dans lequel, à partir de la lumière reçue au premier et au deuxième photodétecteur, on calcule une valeur de lumière diffuse au premier angle prédéterminé ; et

dans lequel on détermine le type de brouillard en fonction de la valeur calculée de lumière diffuse pour le premier angle prédéterminé.

**10.** Procédé selon l'une quelconque des revendications 8 à 9, dans lequel,

dans un troisième agencement, une des sources lumineuses et un des photodétecteurs, qui sont disposés face à la zone de mesure, sont disposés respectivement le long d'un (du) premier et d'un troisième axe de mesure ;

dans lequel le premier et le troisième axe de mesure forment, en se référant à la zone de mesure, ensemble un angle droit ;

dans lequel, à partir de la lumière reçue par les photodétecteurs correspondants, on calcule une valeur supplémentaire de lumière diffuse à l'angle droit ; et

dans lequel on détermine le type de brouillard en fonction de la valeur calculée de lumière diffuse pour l'angle droit.

**11.** Procédé selon la revendication 9 ou 10, dans lequel, on entraîne au moins une des sources lumineuses et au moins un des photodétecteurs qui sont disposés face à la zone de mesure le long d'un des axes de mesure, pour mesurer une valeur d'extinction ; et dans lequel, on calcule une distance de visibilité à partir de la valeur d'extinction calculée.

**12.** Procédé selon la revendication 11, dans lequel au moins la source lumineuse le long de l'axe de mesure que l'on utilise pour la mesure de la valeur d'extinction, est couplée localement à un photodétecteur, tant et si bien que le photodétecteur fournit une information concernant le rendement lumineux émis ; dans lequel on calcule la valeur d'extinction en fonction de l'information concernant le rendement lumineux émis.

**13.** Procédé selon la revendication 12, dans lequel la source lumineuse est couplée au photodétecteur via un miroir semi-transparent appliqué sur une fenêtre de protection, tant et si bien que la lumière émise par la source lumineuse est reçue, à concurrence d'une fraction définie, par le photodétecteur ; dans lequel, à partir de la fraction réfléchie reçue de la lumière émise, on détermine le rendement lumineux fourni par la source lumineuse ; et dans lequel, on calcule la valeur d'extinction en fonction du rendement lumineux calculé.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1408469 A2
- WO 9529393 A
- GB 2340936 A
- DE 10120747 C1
- WO 9409356 A
- DE 4334208 A1

**In der Beschreibung aufgeführte Nicht-Patentliteratur**

- An optical device for the examination of mixedphase aerosols. **STOW et al.** Journal of Physics E. Scientific Instruments. Institute of Physics Publishing, 01. Juli 1980, vol. 13, 737-740